# EUROPEAN PATENT APPLICATION

(11) **EP 0 538 975 A1**
(43) Date of publication of application: **28.04.1993**
(21) Application number: 92301684.4
(22) Date of filing: 27.02.1992
(51) Int. Cl.: B01J 2/12, B01J 2/16, B01F 15/00

(54) **Agitating granulation machine**

(30) Priority: 24.10.1991 JP 295417/91
(71) Applicant: KABUSHIKI KAISHA POWREX, Osaka-shi, Osaka-fu (JP)
(72) Inventor: Kasuya, Kenichi, Kita-ku, Tokyo-to (JP); Hondo, Shinichi, Adachi-ku, Tokyo-to (JP)
(74) Representative: Tillbrook, Christopher John

(57) **Abstract**

An agitating blade 3 mounting an agitating vane 5 on the side surface of a nearly conical hub 6 is pivoted on a bottom wall 25 of a processing container 1, and by rotation of this agitating blade 3, the powder charged in the processing container 1 is agitated and granulated. Air supplied from an external air supply source (not shown) is discharged in the centrifugal direction from a first discharge port 13 composed in the gap between the lower surface of the hub 6 and the bottom wall 25 of the processing container 1, thereby air-sealing the gap area. At this time, a first air passage 12 communicating the first discharge port 13 and the air feed pipe 9 coupled with the air supply source (not shown) is formed widely at the junction to the first air feed pipe 9, and is gradually tapered toward the air discharge direction.

## Description

### BACKGROUND OF THE INVENTION

The present invention relates to an agitation granulation machine used in mixing and granulation of powder in the pharmaceutical, food processing and other industrial fields where powder processing is required, and more particularly to an agitating granulation machine possessing a seal structure for preventing invasion of powder into the gap between the agitating blades or crushing blades rotating in the processing container, and the wall surface of the processing container in the stationary state.

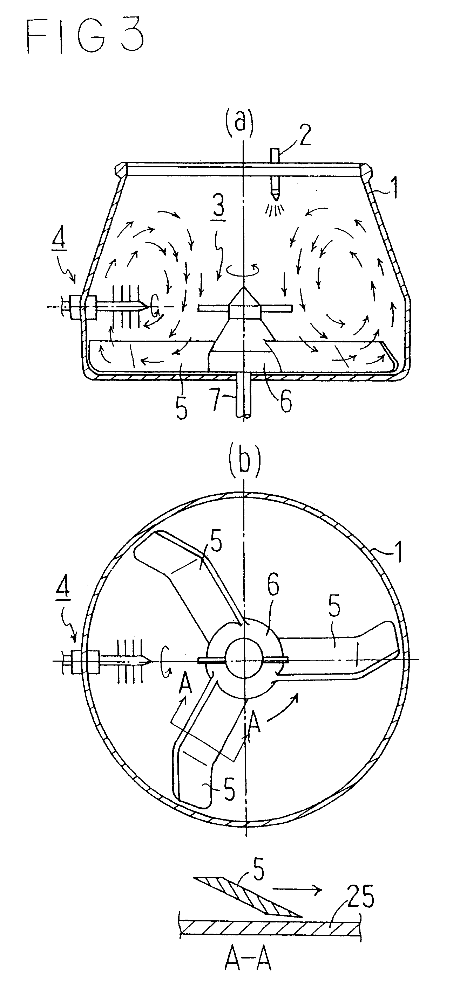

The agitating granulation machine for mixing and granulating powder is composed, as shown in Fig. 3 (a), (b) by disposing nozzle 2, agitating blades 3, and crushing blades 4 in a nearly cylindrical processing container 1.

In this constitution, when the agitating blade 3 rotates, the material powder charged in the processing container 1 is stirred and rotated by the agitating vanes 5.... As a result, an upward propulsion force and a centrifugal force act on the powder, and by the action of the upward propulsion force and centrifugal force, the powder repeats agitating motion as shown in Fig. 3 (a) while revolving on the wall surface in the processing container 1. At this time, by dropping or spraying a binder from the nozzle 2, the powder is moderately aggregated and granules are formed. On the other hand, by the rotation of the crushing blade 4, the circulating flow of the powder is locally cut off, so that lumps and segregation are prevented. In this way, the material powder charged in the processing container 1 is agitated by the turning granulation action by the agitating blade 3 and the crushing granulation action by the crushing blade 4, and is granulated to a desired particle size.

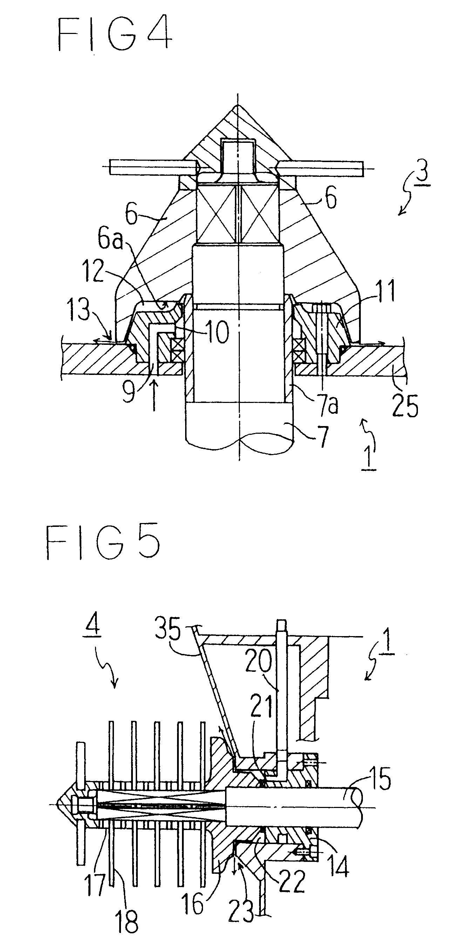

The agitating granulation machine mixes and granulates material powder in the above constitution and action, and in particular the structure of the agitating blade 3 and crushing blade 3 is described below while referring to Figs. 4 and 5.

The agitating blade 3 is composed, as shown in Fig. 4, by inserting a rotary shaft 7 into a bottom wall 25 of the processing container and a bush 11 affixed on the bottom wall 25, and mounting a nearly conical hub 6 furnished with agitating vanes (not shown) at the side, on the top end of this rotary shaft 7. The upper part of the bush 11 is put in a dent 6a provided in the bottom of the hub 6, and a narrow first air passage 12 is constructed of a gap between the inside of the bush 11 and a sleeve 7a surrounding the rotary shaft 7, and a gap between the bush 11 and hub 6. Inside the bush 11, moreover, there is a first air feed pipe 9 communicating with an external air supply source (not shown), and its outlet 10 is disposed at plural positions on the inner surface of the bush 11. In this constitution, the air gushing out of the outlet 10 through the first air feed pipe 9 runs through the first air passage 12, and is discharged in the centrifugal direction from an annular first discharge port 13 formed between the bottom of the hub 6 and the bottom wall 25 of the processing container 1, and by this discharge air, the rotating hub 6 and the stationary bush 11 are sealed, thereby preventing invasion of powder into the gap between these two members 6, 11.

The crushing blade 4 is composed, as shown in Fig. 5, by inserting a rotary shaft 15 into a side wall 35 of the processing container 1 and a sleeve 14 affixed in this side wall 35, and alternately mounting a collar 17 and a crushing edge 18 to the front end portion of the rotary shaft 15 through a rotor 16. At this time, same as above, a narrow second air passage 22 is constructed of a gap between the sleeve 14 and rotor 16, and a gap between the rotor 16 and side wall 35, while at the top end surface of the sleeve 14 an outlet 21 of a second air feed pipe 20 communicating with an external air supply source (not shown) is disposed at plural positions. In this constitution, when air gushes out from the outlet 21 through the second air feed pipe 20, the jet air runs through the second air passage 22 and is discharged in the centrifugal direction from an annular second discharge port 23 formed in the gap between the rotor 16 and side wall 35, thereby sealing the gap between the rotating rotor 16 and the side wall 35.

In this constitution, whether in the agitating blade or in the crushing blade, the first and second air passages involve many narrow structured parts and are bent complicatedly. Accordingly, the pressure loss of the air flow is large, and the air discharge pressure from the first and second discharge ports tends to decline. It was therefor difficult to obtain a secure sealing effect in the sealing portion of the agitating blade and crushing blade in the conventional agitating granulation machine.

It is hence a primary object of the invention to present, in the light of the above problems, an agitating granulation machine capable of enhancing the sealing effect in the sealing portions of the agitating blade and crushing blade.

### SUMMARY OF THE INVENTION

To achieve the above object, the invention presents an agitating granulation machine having agitating blades mounting agitating vanes on side walls of a nearly conical hub, pivoted on the bottom wall of a processing container, for agitating and granulating the powder contained in the processing container by rotation of said agitating blades, and discharging the air supplied from an air supply source outside the machine in the centrifugal direction from a first discharge port composed in a gap between the lower surface of said hub and the bottom wall of the processing container, thereby air-sealing said gap area, wherein
a first air passage communicating at one end with a first air feed pipe coupled to said air supply source and at the other end with said first discharge port is formed widely at the junction with the first air feed pipe, and is gradually tapered toward the air discharge direction.

The invention also presents an agitating granulation machine having crushing blades composed of crushing edge and its supporting rotor, pivoted on the side wall of a processing container, for crushing and granulating the powder contained in the processing container by rotation of said crushing blades, and discharging the air supplied from an air supply source outside the machine in the centrifugal direction from a second discharge port composed in a gap between said rotor and the side wall of the processing wall, thereby air-sealing the gap area, wherein
a second air passage communicating at one end with a second air feed pipe coupled to said air supply source and at the other end with said second discharge port is formed widely at the junction with the second air feed pipe, and is gradually tapered toward the air discharge direction.

By forming the first and second air passages widely at the junction to the first and second air feed pipes, and gradually tapering toward the air discharge direction, the pressure loss of the air flowing in both air passages can be reduced. As a result, the discharge pressure of the air discharged from the first and second discharge ports is elevated, so that invasion of dust particles into both air passages may be prevented more securely.

### BRIEF DESCRIPTION OF THE DRAWINGS

Fig. 1 is a sectional view of an agitating granulation machine of the invention, near the agitating blade.

Fig. 2 is a sectional view of an agitating granulation machine of the invention, near the crushing blade.

Fig. 3 (a) is a sectional view showing the entire structure of the agitating granulation machine, and (b) shows a plan view and a sectional view of line A-A thereof.

Fig. 4 is a sectional view of a conventional agitating granulation machine, near the agitating blade.

Fig. 5 is a sectional view of a conventional agitating granulation machine, near the crushing blade.

### DETAILED DESCRIPTION OF THE PREFERRED EMBODIMENTS

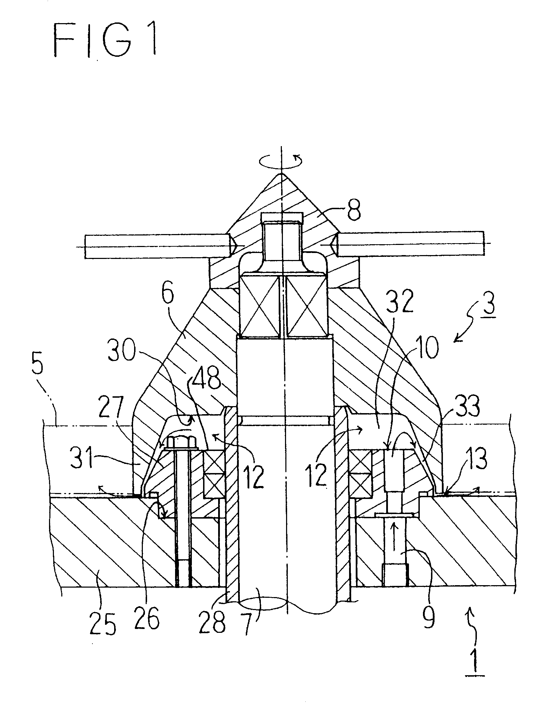

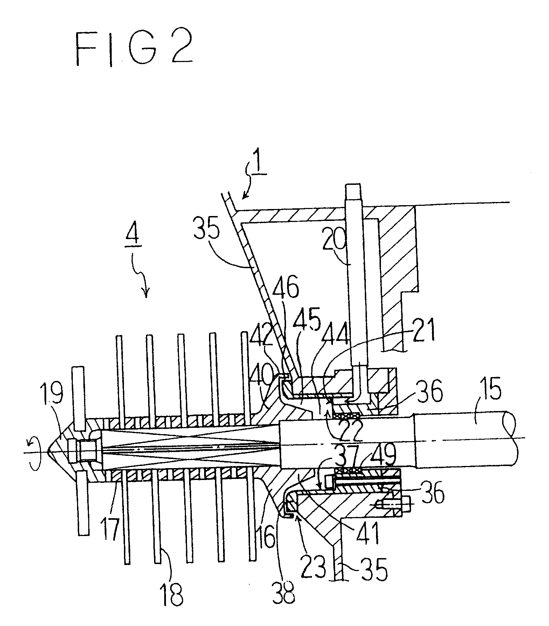

An embodiment of the agitating granulation machine of the invention is explained below while referring to Figs. 1 and 2. In this embodiment, the same members as in the prior art are identified with same reference numbers, and their explanations are omitted.

Fig. 1 is a sectional view around the agitating blade 3. The agitating blade 3 is composed, same as in the prior art, by penetrating a rotary shaft 7 covered with a sleeve 28 into a bottom wall 25 of the processing container 1 and a bush 27 affixed in the bottom wall 25, and attaching a hub 6 to the front end of this rotary shaft 7. In particular, the bush 27 is formed thinner than the conventional one, in a truncated conical form, and its upper surface has a plurality of outlets 10 of the first air feed pipe 9 communicating with an air supply source (not shown) outside the machine. On the other hand, the hub 6 has a dent 30 and an annular protrusion 31 in its lower surface.

The hub 6 is tightened and fixed to the top end portion of the rotary shaft 7 by a locknut 8 while allowing the dent 30 and bush 27 to fit loosely, and at this time a first air passage 12 is formed in the gap between the hub 6 and bush 27. The first air passage 12 is composed of an annular passage 32 formed on the lower surface of the hub 6 and the upper surface of the bush 27, a tapered passage 33 formed on the inner surface of the annular protrusion 31 and the side surface of the bush 27, and an annular first discharge port 13 formed on the front end portion of the annular protrusion 31 and the bottom wall 25 of the processing container 1. At this time, since the bush 27 is formed thinner than in the prior art as mentioned above, the annular passage 32 may be formed relatively wide. Besides, since the upper part of the bush 27 is formed in a truncated conical form, the tapered passage 33 is gradually tapered downward.

In this constitution, when air is injected into the annular passage 32 through the outlet 10 from the first air feed pipe 9, the air is discharged annularly from the first discharge port 13 through the tapered passage 33. At this time, the annular passage 32 is relatively wide while the tapered passage 33 is gradually tapered toward the air discharge direction, the pressure loss of the air flowing in the two passages 32, 33 is small, and the discharge pressure of the air coming out of the first discharge port 13 may be raised as compared with the prior art. Thus, the gap of the hub 6 and the bottom wall 25 may be sealed securely.

The apparatus of the invention, as shown in the drawings, is almost free of sharply bent parts in the first air passage 12. Hence, the material powder or dust particles in the air may hardly start within the passage 12, which makes it possible to agitate and granulate always in clean state. By the same reason, moreover, the flow resistance of the fluid is decreased, and cleaning job or draining and drying job after cleaning in the passage 12 may be done easily, and therefore drain circuit for discharging the cleaning water stagnant in the passage 12 is not required, so that the structure may be simplified.

In the embodiment, meanwhile, a seal ring 48 for sealing between the hub 6 and sleeve 28 is fitted on the upper surface of the hub 6. As a result, only by loosening the locknut 8 and dismounting the hub 6 from the rotary shaft 7, the state of the seal ring 48 may be easily observed visually from inside the processing container 1, and its replacement job may be also done easily.

Fig. 2 shows a sectional view around the crushing blade 4. The rotary shaft 15 penetrating into the side wall 35 of the processing container 1 is covered with a sleeve 36 affixed to the side wall 35. This sleeve 36 is composed by forming a dent 37 and a flange 38 on the top end portion of the rotor 16 side, and the bottom of the dent 37 has one or plurality of outlets 21 of a second air feed pipe 20 communicating with an external air supply source (not shown). The rotor 16 has a flange 40 and a base 41 in a truncated conical form, and the peripheral part of the flange 40 is bent and formed at the processing container 1 side in the axial direction to compose an annular protrusion 42. The base 41, meanwhile, has a proper axial length so as to produce a relatively large gap against the bottom of the dent 37 when buried into the dent 37.

The rotor 16 is inserted into the rotary shaft 15 while allowing the base 41 and dent 37 to fit loosely, and is tightened and fixed to the rotary shaft 15 with locknut 19 properly by away of plural collars 17 and crushing edges 18. At this time, a second air passage 22 is formed in the gap between the rotor 16 and sleeve 36. The second air passage 22 comprises an annular passage 44 constructed of the bottom of the dent 37 and the surface of its confronting rotor 16, a tapered passage 45 constructed of the side surface of the base 41 and the inside surface of the dent 37, a discharge passage 46 constructed of the flange 40, protrusion 42 and flange 38, and an annular second discharge port 23 constructed of the front end portion of the protrusion 42 and the side wall 35. Since the base 41 is formed to as to widen the gap between the base 41 of the rotor 16 and the bottom of the dent 37, the annular passage 44 is relatively wide, and since the base 41 is in a truncated conical form, the tapered passage 45 is tapered gradually toward the front end direction of the crushing blade 4.

In such constitution, when air is injected into the annular passage 44 through the outlet 21 from the second air feed pipe 20, the air is annularly discharged from the second discharge port 23 through the tapered passage 45 and discharge passage 46. At this time, since the annular passage 44 is relatively wide and the tapered passage 45 is tapered gradually as described above, the pressure loss of the air flowing in the passages 44, 45, 46 can be reduced, while the air discharge pressure from the second discharge port 23 may be elevated. Therefore, the gap between the rotor 16 and the side wall 35 may be sealed securely. At the same time, since the rotor 16 has the protrusion 42 so as to plug the second air passage 22, the powder falling down from above hardly invades into the second air passage 22, and hence the sealing effect may be further enhanced.

Same as in the case of the agitating blade 3 above, in this embodiment, too, a seal ring 49 for sealing the sleeve 36 and rotary shaft 15 is fitted to the dent side of the sleeve 36 to make it easier to check the seal ring 49 visually and replace it. That is, these jobs can be done easily from inside of the processing container 1 by detaching the locknut 19, crushing edge 18, collar 17, and rotor 16.

## Claims

1. An agitating granulation machine having agitating blades mounting agitating vanes on side walls of a nearly conical hub, pivoted on the bottom wall of a processing container, for agitating and granulating the powder contained in the processing container by rotation of said agitating blades, and discharging the air supplied from an air supply source outside the machine in the centrifugal direction from a first discharge port composed in a gap between the lower surface of said hub and the bottom wall of the processing container, thereby air-sealing said gap area, wherein
a first air passage communicating at one end with a first air feed pipe coupled to said air supply source and at the other end with said first discharge port is formed widely at the junction with the first air feed pipe, and is gradually tapered toward the air discharge direction.

2. An agitating granulation machine having crushing blades composed of crushing edge and its supporting rotor, pivoted on the side wall of a processing container, for crushing and granulating the powder contained in the processing container by rotation of said crushing blades, and discharging the air supplied from an air supply source outside the machine in the centrifugal direction from a second discharge port composed in a gap between said rotor second discharge port composed in a gap between said rotor and the side wall of the processing wall, thereby air-sealing the gap area, wherein
a second air passage communicating at one end with a second air feed pipe coupled to said air supply source and at the other end with said second discharge port is formed widely at the junction with the second air feed pipe, and is gradually tapered toward the air discharge direction.
